(19) Europäisches Patentamt
European Patent Office
Office européen des brevets

(11) **EP 3 614 220 A1**

(12) **EUROPÄISCHE PATENTANMELDUNG**

(43) Veröffentlichungstag:
**26.02.2020 Patentblatt 2020/09**

(51) Int Cl.:
***G05B 23/02*** *(2006.01)*

(21) Anmeldenummer: **18189722.4**

(22) Anmeldetag: **20.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Deichmann, Jonas
91058 Erlangen (DE)**

(54) **BESTIMMEN VON ZUSTÄNDEN EINER VORRICHTUNG MITTELS SUPPORT-VEKTOR-MASCHINEN**

(57)     Die Erfindung schafft ein System und ein Verfahren zum Bestimmen eines Zustands einer Vorrichtung unter Verwendung einer trainierten Support-Vector-Maschine. Dabei wird ein Betriebsparameterraum in Klassifizierungsvolumina unterteilt, von denen zumindest eines einen Normalzustand, und zumindest ein anderes einen Fehlerzustand der Vorrichtung indiziert. Durch Bestimmen, wo ein aktueller Betriebsparameterpunkt in dem Betriebsparameterraum anzuordnen ist, kann somit ein aktueller Zustand der Vorrichtung ermittelt werden. Weiterhin werden Verfahren und Varianten des Systems vorgeschlagen, um eine Ursachenauswertung zu erleichtern und besonders relevante Betriebsparameter für die Fehlerbestimmung zu ermitteln.

FIG 2

EP 3 614 220 A1

**Beschreibung**

Stand der Technik

Moderne Vorrichtungen sind häufig mit einer Vielzahl von Sensoren ausgestattet, welche verschiedenste Betriebsparameter der Vorrichtung vor, nach oder während deren Betrieb erfassen können. Gewisse Konstellationen von Betriebsparametern können unter Umständen darauf hindeuten, dass sich eine Vorrichtung in einem Normalzustand befindet oder, umgekehrt, darauf hindeuten, dass sich die Vorrichtung in einem Fehlerzustand befindet.

Bei einer großen Anzahl von Betriebsparametern sind die mitunter komplexen Zusammenhänge zwischen den Betriebsparametern, welche zu Fehlerzuständen führen können, häufig verschleiert. Der Zugewinn an Messungen für Betriebsparameter führt somit teilweise statt zu einer Verbesserung der Fehlerüberwachung der Vorrichtung zu einer Verschlechterung, da in schwierigen Fällen beispielsweise relevante Betriebsparameterwerte in einer Vielzahl von anderen Betriebsparameterwerten verborgen sein können und somit nicht mehr auflösbar sind.

Bei Lösungen im Stand der Technik ist es daher sehr aufwändig, aus der Vielzahl der erfassten Betriebsparameter den Zustand der Vorrichtung akkurat zu erfassen. Zudem ist es aufgrund der mitunter komplexen Zusammenhänge im Stand der Technik auch sehr schwierig, eine Ursachenfindung für einen Fehlerzustand herzustellen. Bislang erfolgt die Ursachenfindung üblicherweise durch Experten eines jeweiligen Fachgebiets der Vorrichtung durch das Übereinanderlegen von Kurvendarstellungen oder dergleichen in langwieriger manueller Arbeit.

Aus dem Bereich des Maschinenlernens (Englisch "machine learning") sind sogenannte Support-Vector-Maschinen, SVM (Englisch "support vector machine") bekannt, welche teilweise auch als "Stützvektormaschine" bezeichnet werden. Solche Support-Vector-Maschinen werden mit Trainingsdaten in einem Parameterraum trainiert, um Grenzen ("Klassengrenzen" oder "Klassifizierungsgrenzen") zwischen verschiedenen Klassifizierungsvolumina des Parameterraums derart zu erzeugen, dass um diese Grenzen herum ein möglichst breiter Bereich möglichst frei von den Trainingsdaten bleibt. Nachdem die Support-Vector-Maschine auf diese Weise trainiert wurde, kann die erzeugte Klassengrenze dazu verwendet werden, zu bestimmen, in welchem Klassifizierungsvolumen ein bestimmter, insbesondere der Support-Vector-Maschine zuvor unbekannter, Punkt in dem Parameterraum positioniert ist. Auf diese Weise ermöglichen Support-Vector-Maschinen eine Klassifizierung von n-dimensionalen Punkten.

Ein Lehrbuch, welches sich mit dem Einsatz von Support-Vector-Maschinen zur Musterklassifizierung beschäftigt, ist beispielsweise das Buch von Shigeo Abe: "Support vector machines for pattern classification", Springer-Verlag London 2010, Zweite Edition.

Zusammenfassung der Erfindung

Es ist eine Aufgabe der vorliegenden Erfindung, Zustände einer Vorrichtung, insbesondere einer elektrischen Maschine, akkurat zu bestimmen.

Diese Aufgabe wird gelöst durch die Gegenstände der unabhängigen Ansprüche.

Dementsprechend stellt die Erfindung, gemäß dem ersten Aspekt, ein System zum Bestimmen eines Zustands einer Vorrichtung bereit, mit:

einer Erfassungseinrichtung, welche zum Erfassen von mindestens zwei Betriebsparametern der Vorrichtung während deren Betriebs ausgebildet ist; und
einer Recheneinrichtung, welche dazu ausgebildet ist, ein Betriebspunktmodul, eine trainierte Support-Vector-Maschine, SVM, und ein Ausgabemodul zu implementieren;
wobei das Betriebspunktmodul dazu ausgebildet ist, aus den mindestens zwei erfassten Betriebsparametern einen Betriebspunkt in einem n-dimensionalen Betriebsparameterraum zu erzeugen, wobei n größer gleich zwei ist;
wobei die trainierte Support-Vector-Maschine, SVM, dazu ausgebildet und trainiert ist, den n-dimensionalen Betriebsparameterraum in mindestens zwei Klassifizierungsvolumina zu unterteilen, welche jeweils unterschiedliche Zustände der Vorrichtung indizieren;
wobei ein erstes Klassifizierungsvolumen einen Normalzustand der Vorrichtung indiziert und wobei ein zweites Klassifizierungsvolumen einen Fehlerzustand der Vorrichtung indiziert;
wobei die trainierte Support-Vector-Maschine, SVM, außerdem dazu ausgebildet ist, den von dem Betriebspunktmodul erzeugten Betriebspunkt einem der Klassifizierungsvolumina zuzuordnen; und
wobei das Ausgabemodul dazu ausgebildet ist, einen Zustand der Vorrichtung gemäß demjenigen Klassifizierungsvolumen zu bestimmen, welchem der erzeugte Betriebspunkt durch die trainierte Support-Vector-Maschine, SVM, zugeordnet wurde, und ein Ausgabesignal auszugeben, welches zumindest den bestimmten Zustand der Vorrichtung indiziert.

Bei der Recheneinrichtung kann es sich insbesondere um einen Prozessor mit einem zugehörigen Speicher, eine Cloud-Computing-Plattform, einen Mikrocontroller, eine anwendungsspezifische integrierte Schaltung, ASIC, und/oder dergleichen mehr handeln.

Die Erfassungseinrichtung kann insbesondere mehrere Sensoren umfassen, wobei jeder Sensor zum Erfassen von mindestens einem Betriebsparameter der Vorrichtung während deren Betrieb ausgebildet ist. Beispielsweise kann ein elektrischer Strom durch einen elektrischen Stromsensor erfasst werden, eine Temperatur durch einen Temperatursensor, eine elektrische Spannung durch einen elektrischen Spannungssensor usw.

Das Ausgabemodul kann in einigen vorteilhaften Ausführungsformen dazu ausgebildet sein, eine zeitliche Trajektorie des von dem Betriebspunktmodul erzeugten Betriebspunkts während des Betriebs der Vorrichtung zu erzeugen und eine zu erwartende Fortsetzung dieser Trajektorie in der Zukunft zu ermitteln oder abzuschätzen. Basierend auf dieser zu erwartenden Trajektorie kann das Ausgabemodul in einigen vorteilhaften Ausführungsformen ermitteln, zu welchem Zeitpunkt der Betriebspunkt der Vorrichtung entlang der Trajektorie in einer Position angekommen ist, welche einem Klassifizierungsvolumen zugeordnet oder zuzuordnen ist, welche einen Fehlerzustand der Vorrichtung indiziert.

Das Ausgabemodul kann in diesem Fall weiterhin dazu ausgebildet sein, einen Zeitpunkt und/oder eine verbleibende Zeitdauer anzugeben, an welchem bzw. nach welcher sich die Vorrichtung voraussichtlich in dem Fehlerzustand befinden wird. Auf diese Weise wird ein Benutzer durch eine kontinuierliche Mensch-Maschine-Interaktion darin unterstützt, nicht nur den tatsächlichen Zustand der Vorrichtung zu überwachen, sondern auch einen etwaigen, in der Zukunft liegenden Fehlerzustand vorherzusehen und gegebenenfalls zu vermeiden.

Weiterhin stellt die Erfindung, gemäß einem zweiten Aspekt ein Verfahren zum Bestimmen eines Zustands einer Vorrichtung bereit, mit den Schritten:

Betreiben der Vorrichtung;

Erfassen von mindestens zwei Betriebsparametern der Vorrichtung während deren Betriebs;

Erzeugen eines Betriebspunkts in einem n-dimensionalen Betriebsparameterraum basierend auf den mindestens zwei erfassten Betriebsparametern, wobei n größer gleich zwei ist;

Unterteilen des n-dimensionalen Betriebsparameterraums in mindestens zwei Klassifizierungsvolumina, welche jeweils unterschiedliche Zustände der Vorrichtung indizieren, unter Verwendung einer trainierten Support-Vector-Maschine, SVM;

wobei ein erstes Klassifizierungsvolumen einen Normalzustand der Vorrichtung indiziert und wobei ein zweites Klassifizierungsvolumen einen Fehlerzustand der Vorrichtung indiziert;

Zuordnen des erzeugten Betriebspunkts zu einem Klassifizierungsvolumen;

Bestimmen eines Zustands der Vorrichtung gemäß demjenigen Klassifizierungsvolumen, welchem der erzeugte Betriebspunkt zugeordnet wurde; und

Ausgeben eines Ausgabesignals, welches zumindest den bestimmten Zustand der Vorrichtung indiziert.

Durch die Verwendung der Support-Vector-Maschine ist es möglich, selbst eine Vielzahl von Betriebsparametern in Hinsicht darauf auszuwerten, ob diese einen aktuellen oder sogar einen zukünftigen Fehlerzustand der Vorrichtung indizieren. Dadurch, dass dies auch während des Betriebs der Vorrichtung erfolgen kann, wird der Benutzer beim Betreiben der Vorrichtung unterstützt, da er auf diese Weise einen Einblick in deren internen Zustand erhält, welcher ihm ansonsten verborgen geblieben wäre.

Das Trainieren der Support-Vector-Maschine erfolgt bevorzugt durch gelabelte Betriebspunkte in dem n-dimensionalen Betriebsparameterraum, wobei die Labels angeben, welchem Klassifizierungsvolumen der entsprechende Betriebsparameterpunkt zuzuordnen ist bzw. welcher Gruppe (z.B. Normalzustand, Fehlerzustand 1, Fehlerzustand 2, etc.) zugeordnet ist.

Gemäß einem weiteren Aspekt stellt die Erfindung eine Vorrichtung, insbesondere eine elektrische Maschine, mit einem System gemäß dem ersten Aspekt der vorliegenden Erfindung bereit. Bei der elektrischen Maschine kann es sich beispielsweise um einen Elektromotor und/oder einen elektrischen Generator handeln. Alternativ kann die Vorrichtung auch beispielsweise eine Pumpe oder ein Antriebsstrang sein oder eine Pumpe oder einen Antriebsstrang umfassen.

Die Erfindung stellt gemäß einem weiteren Aspekt ein Computerprogrammprodukt bereit, welches ausführbaren Programmcode enthält, welcher so ausgebildet ist, dass der Programmcode, wenn er ausgeführt wird, das Betriebspunktmodul, die trainierte Support-Vector-Maschine und das Ausgabemodul realisiert.

Weiterhin stellt die Erfindung gemäß einem weiteren Aspekt ein nicht-flüchtiges computerlesbares Speichermedium bereit, welches ausführbaren Programmcode enthält, welcher so ausgebildet ist, dass der Programmcode, wenn er ausgeführt wird, das Betriebspunktmodul, die trainierte Support-Vector-Maschine und das Ausgabemodul realisiert.

Weitere bevorzugte Ausführungsformen und Weiterbildungen ergeben sich aus den Unteransprüchen sowie aus der Beschreibung unter Bezugnahme auf die Figuren.

Gemäß einigen bevorzugten Ausführungsformen umfassen die von der Erfassungseinrichtung erfassten Betriebsparameter mindestens einen, besonders bevorzugt mindestens zwei, der folgenden Betriebsparameter:

- eine elektrische Spannung;
- eine elektrische Stromstärke;
- eine Beschleunigung;
- eine lineare Beschleunigung;
- eine Rotationsgeschwindigkeit;
- eine Rotationsbeschleunigung;
- eine Temperatur.

Beispielsweise kann es sich in einigen bevorzugten Ausführungsformen bei der Vorrichtung um eine elektrische Maschine handeln, welche insbesondere durch die Betriebsparameter elektrische Spannung, elektrische Stromstärke, Rotationsbeschleunigung und/oder Rotationsgeschwindigkeit charakterisierbar ist.

In einigen bevorzugten Ausführungsformen ist die trainierte Support-Vector-Maschine dazu ausgebildet, den n-dimensionalen Betriebsparameterraum in mindestens drei Klassifizierungsvolumina zu unterteilen, wobei das erste Klassifizierungsvolumen den Normalzustand der Vorrichtung indiziert und wobei das zweite Klassifizierungsvolumen und ein drittes Klassifizierungsvolumen unterschiedliche Fehlerzustände in der Vorrichtung indizieren. Auf diese Weise kann ein bestehender oder prognostizierter Fehlerzustand noch genauer bestimmt und identifiziert werden.

Im Fall von genau drei Klassifizierungsvolumina werden die Klassifizierungsvolumina von der trainierten Support-Vector-Maschine durch zwei-dimensionale Ebenen voneinander getrennt. Im Fall von vier oder mehr Betriebsparametern, wobei beispielsweise drei verschiedene Fehlerzustände identifiziert werden können, werden die Klassifizierungsvolumina von der trainierten Support-Vector-Maschine durch sogenannte Hyperebenen voneinander getrennt.

In einigen bevorzugten Ausführungsformen ist die Support-Vector-Maschine dazu eingerichtet, einen linearen Kernel zu verwenden. Auf dem technischen Gebiet der Support-Vector-Maschinen werden, insbesondere wenn zu klassifizierende Punkte vorliegen oder zu erwarten sind, welche nicht linear voneinander separierbar sind, häufig vektorwertige Funktionen $\phi(\vec{x})$ verwendet, um Eingabevektoren $\vec{x}$, welche die Betriebsparameter in dem Betriebsparameterraum repräsentieren, in einen üblicherweise höherdimensionalen Merkmalsraum (Englisch "feature space") zu transformieren, in welchem die Separation durch die Support-Vector-Maschine üblicherweise einfacher ist.

Zunächst kann einämlich eine Entscheidungsfunktion $D(\vec{x})$ für einen Eingabevektor $\vec{x}$ durch

$$D(\vec{x}) = \vec{w}^T \vec{x} + b$$

definiert werden, wobei $\vec{w}$ ein m-dimensionaler Vektor ist und b ein Bias-Term ist. Eine Entscheidung kann beispielsweise definiert sein durch:

$$\vec{w}^T \vec{x}_i + b \begin{cases} \geq 1 & \text{für} \quad y_i = 1 \\ < 1 & \text{für} \quad y_i = -1 \end{cases}$$

wobei jedes $y_i$ ein Label für einen Trainingspunkt $x_i$ darstellt, d.h. $y_i=1$ die Zugehörigkeit des Trainingspunkts $x_i$ zu einer ersten Klasse (Label "1") ausdrückt und $y_i=-1$ die Zugehörigkeit des Trainingspunkts $x_i$ zu einer zweiten Klasse (Label "-1") ausdrückt. Eine Lösung für das Problem des Findens der Klassengrenzen kann dann unter Aufstellung der Karush-Kuhn-Tucker-Bedingungen gefunden werden.

Unter Verwendung einer vektorwertigen Funktion $\phi(\vec{x})$ ("Mapping-Funktion") kann die Entscheidungsfunktion stattdessen definiert für den Merkmalsraum definiert werden durch

$$D(\vec{x}) = \vec{w}^T \phi(\vec{x}) + b.$$

Mit dieser "Mapping-Funktion" $\phi(\vec{x})$ kann ein sogenannter Kernel $K(\vec{x}, \vec{x}')$ durch

$$K(\vec{x}, \vec{x}') = \phi^T(\vec{x}) \, \phi(\vec{x}')$$

definiert werden. Vorteilhaft kann dann, anstatt mit der Mapping-Funktion $\phi(\vec{x})$ explizit zu arbeiten, für das Bestimmen der die Klassifizierungsvolumina trennenden Ebenen bzw. Hyperebenen statt mit der Mapping-Funktion vorteilhaft nun mit dem Kernel $K(\vec{x}, \vec{x}')$ gearbeitet werden.

Insbesondere können Karush-Kuhn-Tucker-Bedingungen dann unter Verwendung des Kernels aufgestellt werden. Diese Technik, wonach $K(\vec{x}, \vec{x}')$ bei dem Trainieren der Support-Vector-Maschine und auch bei der Klassifikation anstelle der Mapping-Funktion $\phi(\vec{x})$ verwendet wird, wird Kernel-Trick (Englisch "kernel trick") genannt.

Lineare Kernels haben die Form

$$K(\vec{x}, \vec{x}') = \vec{x}^T \, \vec{x}'$$

und bewirken keine Transformierung des Input-Vektors $\vec{x}$, welcher den Betriebsparameterpunkt repräsentiert, in einen höherdimensionalen Raum. Anders ausgedrückt hat der Merkmalsraum dieselbe Dimensionalität wie der ursprüngliche Betriebsparameterraum.

In einigen bevorzugten Ausführungsformen ist die Erfassungseinrichtung dazu eingerichtet, die erfassten Betriebsparameter als Anteile (beispielsweise Bruchteile, Brüche oder Prozentwerte) eines jeweils entsprechenden Betriebsparameter-Maximalwerts zu erfassen. Mit anderen Worten kann vorteilhaft eine Normierung der Betriebsparameter durchgeführt werden.

Dies erlaubt, wie im Nachfolgenden näher erläutert wird, eine Bestimmung der Wertigkeit der einzelnen Betriebsparameter auf die Klassifizierungsgrenzen der Klassifizierungsvolumina (das heißt auf die Ebenen bzw. Hyperebenen) vorzunehmen, woraus sich Rückschlüsse auf Fehlerursachen ergeben können.

In einigen vorteilhaften Ausführungsformen ist die Recheneinrichtung dazu ausgebildet, ein Auswertungsmodul zu implementieren, welches dazu ausgebildet ist:

- einen jeweiligen Normalenvektor auf jede Ebene oder Hyperebene zu bestimmen, welche das erste Klassifizierungsvolumen, welches den Normalzustand der Vorrichtung indiziert, von einem Klassifizierungsvolumen trennt, welches einen Fehlerzustand der Vorrichtung indiziert, und

- für jeden der bestimmten Normalenvektoren den Wert des betragsmäßig größten Eintrags des Normalenvektors zu bestimmen und auszugeben.

Dieser betragsmäßig größte Eintrag des jeweiligen Normalenvektors zeigt somit an, eine Veränderung welches Parameters am ehesten dazu führt, dass der Betriebspunkt sich von einer Position innerhalb des ersten Klassifizierungsvolumens (Normalzustand) befindet, in das jeweilige, dem Normalenvektor zugehörige Klassifizierungsvolumen, welches einen Fehlerzustand indiziert, bewegt.

In einigen vorteilhaften Ausführungsformen umfasst das Verfahren gemäß dem zweiten Aspekt der vorliegenden Erfindung die folgenden Merkmale und Schritte: Der n-dimensionale Betriebsparameterraum wird durch die trainierte Support-Vector-Maschine in mindestens drei Klassifizierungsvolumina unterteilt, wobei das erste Klassifizierungsvolumen den Normalzustand der Vorrichtung indiziert und wobei das zweite Klassifizierungsvolumen und ein drittes Klassifizierungsvolumen unterschiedliche Fehlerzustände der Vorrichtung indizieren.

Die erfassten Betriebsparameter können insbesondere, wie im Voranstehenden erläutert, als Anteile eines jeweils entsprechenden Betriebsparameter-Maximalwerts erfasst werden. Dies beinhaltet, dass die Betriebsparameter zunächst als absolute Werte erfasst werden und dann, entweder durch die Erfassungseinrichtung selbst oder durch eine zwischengeschaltete Recheneinheit mit vorbestimmten und gespeicherten jeweiligen Betriebsparameter-Maximalwerten dividiert werden, um die entsprechenden Anteile (beispielsweise Bruchteile, Brüche oder Prozentwerte) zu bestimmen.

Vorteilhaft kann außerdem ein jeweiliger Normalenvektor auf jede Ebene oder Hyperebene bestimmt werden, welche das erste Klassifizierungsvolumen, welches den Normalzustand der Vorrichtung identifiziert, von einem Klassifizierungsvolumen trennt, welches einen Fehlerzustand der Vorrichtung indiziert. Es erfolgt außerdem vorteilhaft ein Bestimmen und Ausgeben des Werts des betragsmäßig größten Eintrags jedes bestimmten Normalenvektors. Wie im Voranstehenden erläutert, kann auf diese Weise ermittelt werden, welcher Betriebsparameter besonders maßgeblich für das Erreichen des jeweiligen Fehlerzustands ist.

Beispielsweise kann die Vorrichtung eine elektrische Maschine, genauer ein elektrischer Motor sein, welcher beispielsweise mit mindestens einem Vibrationssensor und mindestens einem Temperatursensor ausgebildet ist. Es können zwei oder mehr Vibrationssensoren an verschiedenen Stellen des elektrischen Motors und/oder zwei oder mehr Temperatursensoren an verschiedenen Stellen des elektrischen Motors angeordnet sein. Jeder Messwert jedes Sensors des elektrischen Motors kann einen Eintrag (Index) in einem Eingabevektor füllen. Der jeweils aktuelle Eingabevektor stellt somit einen jeweils aktuellen Betriebspunkt des elektrischen Motors dar.

Wenn es nun zu einem bestimmten Zeitpunkt dazu kommt, dass die Motorsteuerung des elektrischen Motors die Fehlermeldung ausgibt, dass der Motor ausgefallen sei, kann mit der beschriebenen Technik festgestellt werden, an welcher Stelle des Motors das Problem stattgefunden hat und ob die mögliche Ursache eher eine Überhitzung (größere Gewichtung der Temperatursensordaten) oder eine überhohe Vibration (größere Gewichtung der Vibrationssensordaten) war.

In einem anderen Beispiel kann die Vorrichtung eine Pumpe, beispielsweise für Abwasser, sein, welche im Normalfall eine bestimmte Menge elektrischen Stroms (erster Betriebsparameter) und eine entsprechende Menge elektrischer Spannung (zweiter Betriebsparameter) benötigt. Weiterhin kann eine Temperatur der Pumpe (dritter Betriebsparameter) gemessen werden.

In einem weiteren Beispiel kann die Vorrichtung eine elektrische Säge, beispielsweise eine Kreissäge für die Holzverarbeitung, sein. Als Betriebsparameter können eine Motortemperatur, eine Vibration und eine Drehgeschwindigkeit gemessen und erfasst werden. Bei einem Ausfall der Säge kann zum Beispiel eine hohe Motortemperatur auf allgemeine Überlastung oder Verschleiß des Motors als Ursache hinweisen; eine starke Vibration in Kombination mit hoher Temperatur kann auf einen Verschleiß des Sägeblattes als Ursache hinweisen; und eine langsame Drehgeschwindigkeit in Kombination mit geringer Vibration kann auf die Ursache hinweisen, dass ein zu sägendes Holz zu hart ist.

In noch einem weiteren Beispiel kann die Vorrichtung ein Antriebsstrang eines Fahrzeugs, z.B. eines Elektrofahrzeugs oder eines Hybridfahrzeug, sein. An dem Antriebsstrang kann beispielsweise eine aktuelle Drehzahl als erster Betriebsparameter und ein aktuelles Drehmoment als zweiter Betriebsparameter gemessen werden. Wenn der Antriebsstrang beispielsweise wegen Überschreitung eines maximal zulässigen Drehmoments angehalten wird, kann z.B. ermittelt werden, ob die Ursache eine zu starke Last an der Achse ist oder eher eine zu starke Beschleunigung.

Weiterhin kann auch eine geordnete Liste der Einträge jedes bestimmten Normalenvektors nach deren Größe bestimmt und ausgegeben werden (jeweils im Zusammenhang mit deren Indexwert, damit nachvollzogen werden kann, welcher Eintrag zu welchem Betriebsparameter gehört), um eine Hierarchie der Wichtigkeit der entsprechenden Betriebsparameter für das Erreichen des jeweiligen Fehlerzustands zu erhalten. Dies kann bei einer Evaluierung der möglichen Fehlerursachen beispielsweise in einer Werkstatt von großem Vorteil sein.

Die obigen Ausgestaltungen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:

Fig. 1 ein schematisches Blockschaltbild eines Systems zum Bestimmen eines Zustands einer Vorrichtung gemäß einer Ausführungsform des ersten Aspekts der vorliegenden Erfindung;

Fig. 2 eine schematische Darstellung eines Betriebsparameterraums mit Trainingsdaten;

Fig. 3 ein schematisches Flussdiagramm zum Erläutern eines Verfahrens zum Bestimmen eines Zustands einer Vorrichtung gemäß einer Ausführungsform des zweiten Aspekts der vorliegenden Erfindung; und

Fig. 4 eine weitere schematische Darstellung eines Betriebsparameterraums mit Trainingsdaten.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - je-weils mit denselben Bezugszeichen versehen. Die Nummerierung der Verfahrensschritte dient der besseren Übersichtlichkeit und soll nicht, sofern nicht explizit oder implizit etwas anderes ausgesagt wird, als eine zeitliche Reihenfolge verstanden werden. Insbesondere können einige Verfahrensschritte auch gleichzeitig oder in vertauschter Reihenfolge ausgeführt werden.

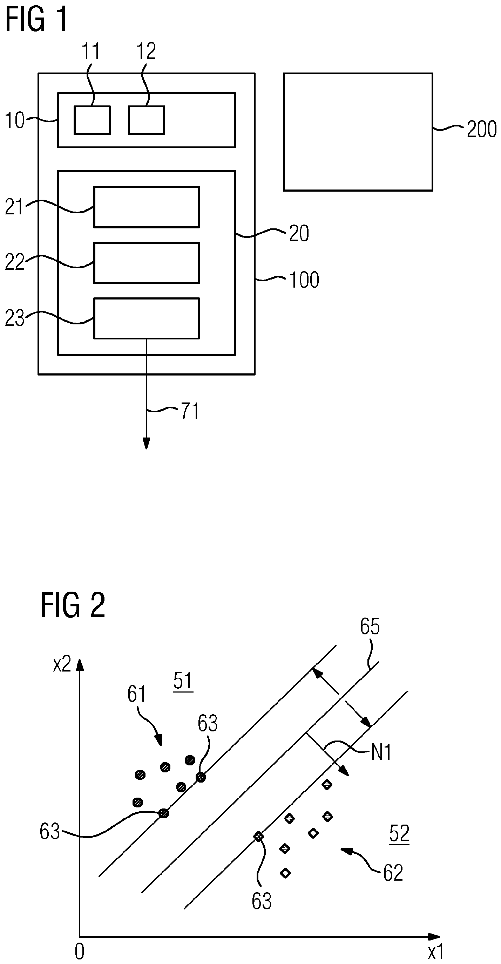

Fig. 1 zeigt ein schematisches Blockschaltbild eines Systems 100 zum Bestimmen eines Zustands einer Vorrichtung 200. Bei der Vorrichtung 200 kann es sich insbesondere um eine elektrische Maschine handeln, beispielsweise um einen elektrischen Motor und/oder Generator. Alternativ kann die Vorrichtung 200 auch eine Pumpe oder ein Antriebsstrang eines Fahrzeugs sein, beispielsweise eines elektrischen Fahrzeugs oder eines Hybridfahrzeugs.

Obgleich in Fig. 1 das System 100 und die Vorrichtung 200 getrennt voneinander dargestellt sind, kann in einigen Ausführungsformen die Vorrichtung 200 das System 100 zum Bestimmen des Zustands der Vorrichtung 200 beinhalten. Erfindungsgemäß kann auch ein Fahrzeug bereitgestellt werden, welches sowohl das System 100 als auch das System 200 umfasst.

Im Folgenden wird das System 100 näher am Beispiel eines elektrischen Motors als die Vorrichtung 200 dargelegt, wobei die beschriebenen Konzepte nicht auf eine solche Vorrichtung 200 beschränkt sind.

Das System 100 umfasst eine Erfassungseinrichtung 10, welche zum Erfassen von mindestens zwei Betriebsparametern der Vorrichtung 200 während deren Betriebs ausgebildet ist. Hierzu kann die Erfassungseinrichtung beispielsweise jeweils einen Sensor 11, 12 umfassen, welcher jeweils dazu eingerichtet ist, den jeweiligen Betriebsparameter zu erfassen.

Wie im Voranstehenden bereits beschrieben wurde, ist es vorteilhaft, wenn die Betriebsparameter als Anteile eines jeweiligen Betriebsparameter-Maximalwerts erfasst werden. Die einzelnen Sensoren 11, 12 können beispielsweise so eingerichtet sein, dass sie die Messwerte bereits als solche Anteile ausgeben.

Alternativ kann die Erfassungseinrichtung 10 auch eine Umrechnungseinheit, beispielsweise implementiert durch einen Prozessor, Mikrocontroller, ein ASIC oder eine FPGA, umfassen, welche zum Umrechnen der von den Sensoren 11, 12 erfassten Rohsensordaten in die entsprechenden Anteile ausgebildet ist. Im Beispiel eines elektrischen Motors als Vorrichtung 200 kann beispielsweise ein erster Sensor 11 zum Erfassen eines an dem elektrischen Motor 200 anliegenden Stroms und ein zweiter Sensor 12 zum Erfassen einer an dem elektrischen Motor 200 anliegenden Spannung ausgelegt sein.

Das System 100 umfasst weiterhin eine Recheneinrichtung 20, welche dazu ausgebildet ist, einen Betriebspunktmodul 21, eine trainierte Support-Vector-Maschine 22 und ein Ausgabemodul 23 zu implementieren. Das Betriebspunktmodul 21, die trainierte Support-Vector-Maschine 22, und das Ausgabemodul 23 sind bevorzugt als Software-Module realisiert, welche durch die Recheneinrichtung 20 ausgeführt werden. Optional kann die Recheneinrichtung 20 auch dazu ausgebildet sein, das im Voranstehenden beschriebene Auswertungsmodul zu implementieren.

Bei der Recheneinrichtung 20 kann es sich insbesondere um einen Prozessor mit einem zugehörigen Speicher, eine Cloud-Computing-Plattform, einen Mikrocontroller, eine anwendungsspezifische integrierte Schaltung, ASIC, und/oder dergleichen mehr handeln.

Das Betriebspunktmodul 21 ist dazu ausgebildet, aus den mindestens zwei erfassten Betriebsparametern (beispielsweise Spannung und Stromstärke) einen Betriebspunkt in einem n-dimensionalen Betriebsparameterraum zu erzeugen, wobei n ≥ 2 ist. Dieser Betriebspunkt, welcher, wenn es sich bei den erfassten Betriebsparametern um aktuelle Betriebsparameter handelt, einen aktuellen Betriebspunkt darstellt, kann erfindungsgemäß dazu verwendet werden, einen aktuellen Zustand der Vorrichtung 200 zu indizieren.

Hierzu ist die trainierte Support-Vector-Maschine 22 dazu ausgebildet und trainiert, den n-dimensionalen Betriebsparameterraum in mindestens zwei Klassifizierungsvolumina zu unterteilen, welche jeweils unterschiedliche Zustände der Vorrichtung 200 indizieren. Je nach der Dimensionalität des n-dimensionalen Betriebsparameterraums handelt es sich bei den Klassengrenzen zwischen Klassifizierungsvolumina um Geraden (bei n = 2), Ebenen (bei n = 3) oder sogenannte Hyperebenen (n ≥ 4).

Hierzu werden der Support-Vector-Maschine Trainingsdaten mit entsprechenden Labels $y_i$ bereitgestellt, welche jedem der Trainingspunkte $x_i$ einen jeweiligen Zustand (Normalzustand, Fehlerzustand 1, Fehlerzustand 2,...) zuweisen.

Fig. 2 zeigt eine schematische Darstellung eines Betriebsparameterraums mit Trainingsdaten am Beispiel von n = 2 mit zwei Betriebsparametern x1, x2. Hierbei ist ein erster Betriebsparameter x1 in der horizontalen Achse dargestellt und indiziert (oder: stellt dar) beispielsweise eine an dem elektrischen Motor 200 anliegende Stromstärke. Ein zweiter Betriebsparameter x2 ist auf der vertikalen Achse aufgetragen und indiziert (oder: stellt dar) beispielsweise eine an dem elektrischen Motor 200 anliegende Spannung.

Erste Trainingspunkte 61, welche beispielsweise einen Normalzustand der Vorrichtung 200 indizieren, sind in Fig. 2 durch Kreise dargestellte. Zweite Trainingspunkte 62, welche einen Fehlerzustand der Vorrichtung 200 indizieren, sind in Fig. 2 durch Rauten dargestellt. Bei dem Trainieren der Support-Vector-Maschine 22 wird eine optimale Gerade, Ebene oder Hyperebene 65 ermittelt, welche die Trainingspunkte 61, 62 idealerweise so voneinander teilt, dass sich ein maximaler Abstand d1, d2 zu den Trainingspunkten 61, 62 ergibt.

Die in Fig. 2 dargestellten Datenpunkte 63 sowohl der ersten Trainingsdaten 61 als auch der zweiten Trainingsdaten 62, welche allesamt den geringstmöglichen Abstand zu der optimalen Gerade, Ebene oder Hyperebene 65 haben, werden als Stützvektoren (Englisch "support vectors") bezeichnet, da diese im Grunde ausreichen würden, um die Support-Vector-Maschine zu trainieren. Aus diesen Stützvektoren erhält die Support-Vector-Maschine auch ihren Namen.

Nach dem Vorangehenden teilt die optimale Gerade, Ebene oder Hyperebene 65 den Betriebsparameterraum, welcher durch die x1-Achse und die x2-Achse aufgespannt wird, in ein erstes Klassifizierungsvolumen 51, welches einen Normalzustand indiziert, und ein zweites Klassifizierungsvolumen 52, welches einen Fehlerzustand indiziert.

Die Support-Vector-Maschine 22 kann gemäß verschiedenen bekannten Varianten und Weiterbildungen von Support-Vector-Maschinen ausgebildet werden, beispielsweise als Soft-Margin-Support-Vector-Maschine oder als Hard-Margin-Support-Vector-Maschine.

Die trainierte Support-Vector-Maschine 22 ist nun dazu in der Lage, einen beliebigen aktuellen Betriebspunkt, welcher von dem Betriebspunktmodul gebildet wurde, einem der vorhandenen Klassifizierungsvolumina 51, 52 zuzuordnen.

Es versteht sich, dass die hier beschriebenen Verfahren auch bei mehr als zwei Klassifizierungsvolumina, beispielsweise drei oder mehr Klassifizierungsvolumina 51, 52 anwendbar sind, wobei das erste Klassifizierungsvolumen 51 stets den Normalzustand indiziert und wobei weitere Klassifizierungsvolumina üblicherweise verschiedene Fehlerzustände klassifizieren. Es ist auch möglich, dass es mehrere voneinander getrennte Klassifizierungsvolumina gibt, welche jeweils verschiedene Normalzustände der Vorrichtung 200 indizieren, das heißt Zustände, welche sich in ihren Betriebsparametern zwar stark unterscheiden, aber beide im Betrieb der Vorrichtung 200 akzeptabel sind.

Wieder bezugnehmend auf Fig. 1 ist das Ausgabemodul 23 dazu ausgebildet, einen Zustand der Vorrichtung 200 gemäß demjenigen Klassifizierungsvolumen 51, 52 zu bestimmen, in welchem der erzeugte Betriebspunkt durch die Support-Vector-Maschine zugeordnet wurde, und ein Ausgabesignal 71 auszugeben, welches zumindest den bestimmten Zustand der Vorrichtung 200 indiziert.

Beispielsweise kann das Ausgabesignal 71 als Information eine logische Null tragen, um einen Normalzustand der Vorrichtung 200 zu indizieren und eine logische Eins tragen, um einen Fehlerzustand der Vorrichtung 200 zu indizieren. Bei mehr als einem Fehlerzustand der Vorrichtung 200, das heißt mehr als drei Klassifizierungsvolumina 51, 52, kann das Ausgabesignal 71 beispielsweise eine binärkodierte Zahleninformation tragen, welche den Zustand der Vorrichtung 200 eindeutig identifiziert und charakterisiert, beispielsweise 0 ("00") - Normalzustand, 1 ("01") - Erster Fehlerzustand, 2 ("10") - Zweiter Fehlerzustand, und so weiter.

Das Ausgabemodul 23 kann weiterhin dazu ausgebildet sein, über einen vorbestimmten Zeitraum hinweg, oder kontinuierlich, eine Trajektorie des Betriebspunkts im Verlauf der Zeit in dem n-dimensionalen Betriebsparameterraum zu bestimmen und deren Verlauf in der Zukunft zu extrapolieren.

Hierauf basierend kann der im zeitlichen Verlauf erste Zeitpunkt bestimmt werden, an welchem der Betriebspunkt voraussichtlich eine Position in dem n-dimensionalen Betriebsparameterraum einnimmt, welche einem anderen Zustand der Vorrichtung 200 zuzuordnen ist als dem aktuellen Zustand.

Beispielsweise kann ermittelt werden, dass gemäß der extrapolierten Trajektorie des Betriebspunkts in X Minuten (z.B. vier Minuten) der Betriebspunkt von dem ersten Klassifizierungsvolumen 51, welches den Normalzustand indiziert, in eine Position wechselt, welche dem zweiten Klassifizierungsvolumen 52 angehört, welches einen Fehlerzustand indiziert. Mit anderen Worten kann extrapoliert werden, dass entsprechend in X Minuten der indizierte Fehlerzustand eintreten wird.

Darauf basierend kann das Ausgabesignal 71 beispielsweise eine Zeitangabe umfassen, welche indiziert, wann mindestens ein bestimmter Fehlerzustand eintreten wird, wann ein Wechsel zwischen bestimmten (und welchen) Klassifizierungsvolumina 51, 52 stattfinden wird und/oder was dieser Wechsel bedeutet.

Beispielsweise ist denkbar, dass die verschiedenen Klassifizierungsvolumina 51, 52, welche unterschiedliche Fehlerzustände der Vorrichtung 200 indizieren, konsekutiv schwerwiegendere Fehlerzustände der Vorrichtung 200 indizieren. Die extrapolierte Trajektorie kann somit für jede Klassengrenze, das heißt optimale Gerade, Ebene oder Hyperebene 65, welche zwei Klassifizierungsvolumina 51, 52 voneinander trennt, angeben, ob und wann der Betriebspunkt gemäß der extrapolierten Trajektorie diese schneiden wird und eine entsprechende Auflistung ausgeben.

Auf diese Weise kann einem Benutzer beispielsweise angezeigt werden, wann eine geringe Beeinträchtigung der Funktion der Vorrichtung 200 voraussichtlich eintreten wird (erster Fehlerzustand - Betriebspunkt wird zweitem Klassifizierungsvolumen 52 zugeordnet), wann eine stärkere Beeinträchtigung auftreten wird (zweiter Fehlerzustand - Betriebspunkt wird drittem Klassifizierungsvolumen zugeordnet) und wann ein endgültiger Zusammenbruch der Funktion der Vorrichtung 200 erfolgen wird (dritter Fehlerzustand - Betriebspunkt wird viertem Klassifizierungsvolumen zugeordnet).

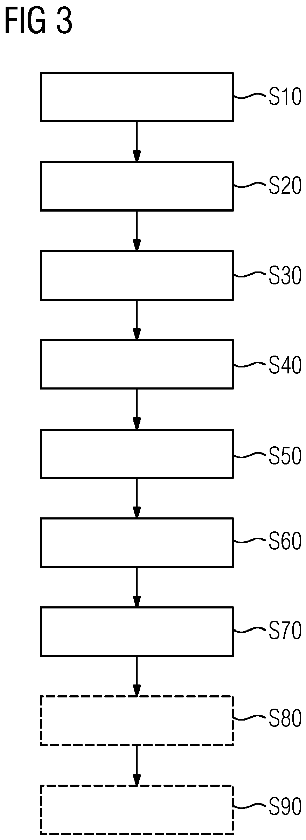

Fig. 3 zeigt ein schematisches Flussdiagramm zum Erläutern eines Verfahrens zum Bestimmen eines Zustands einer Vorrichtung 200 gemäß einer Ausführungsform des zweiten Aspekts der vorliegenden Erfindung. Das Verfahren gemäß Fig. 3 ist insbesondere mittels des Systems gemäß dem ersten Aspekt der vorliegenden Erfindung ausführbar, insbesondere mit dem System 100 gemäß Fig. 1.

Das Verfahren gemäß Fig. 3 ist somit gemäß allen in Bezug auf das System gemäß dem ersten Aspekt der Erfindung beschriebenen Varianten, Modifikationen und Optionen anpassbar und umgekehrt. Bei der Beschreibung des Verfahrens gemäß Fig. 3 wird teilweise auch auf Bezugszeichen der Fig. 1 und Fig. 2 Bezug genommen werden, ohne dass dadurch eine Beschränkung auf die Verwendung mit dem System 100 gemäß Fig. 1 zu verstehen sein soll.

In einem Schritt S10 wird die Vorrichtung 200 betrieben. Beispielsweise wird ein elektrischer Motor oder eine Pumpe eingeschaltet oder dergleichen.

In einem Schritt S20 der mindestens zwei Betriebsparameter x1, x2 der Vorrichtung 200 während deren Betriebs erfasst, beispielsweise wie im Voranstehenden in Bezug auf die Erfassungseinrichtung 10 beschrieben wurde. Insbesondere kann je ein Betriebsparameter x1, x2 der Vorrichtung 200 durch einen entsprechenden Sensor 11, 12 erfasst werden.

In einem Schritt S30 wird ein Betriebspunkt in einem n-dimensionalen Betriebsparameterraum basierend auf den mindestens zwei erfassten Betriebsparametern erzeugt, wobei n ≥ 2 ist. Das Erzeugen S30 des Betriebspunkts kann erfolgen, wie im Voranstehenden mit Bezug auf das Betriebspunktmodul 21 erläutert wurde.

In einem Schritt S40 wird der n-dimensionale Betriebsparameterraum in mindestens zwei Klassifizierungsvolumina 51, 52 unterteilt, welche jeweils unterschiedliche Zustände der Vorrichtung indizieren, und zwar unter Verwendung einer trainierten Support-Vector-Maschine 22. Das Unterteilen S40 des n-dimensionalen Betriebsparameterraums kann alternativ auch als Erzeugen von Klassifizierungsgrenzen 65 beschrieben werden.

Das Trainieren der Support-Vector-Maschine 22 kann beispielsweise erfolgen wie im Voranstehenden beschrieben, so dass vorliegend auch ein Verfahren zum Trainieren einer Support-Vector-Maschine für den Einsatz in einem System zum Bestimmen eines Zustands einer Vorrichtung 200 bereitgestellt wird.

Das Unterteilen S40 des n-dimensionalen Betriebsparameterraums erfolgt derart, dass ein erstes Klassifizierungsvolumen 51 einen Normalzustand der Vorrichtung 200 indiziert und ein zweites Klassifizierungsvolumen 52 einen Fehlerzustand der Vorrichtung 200 indiziert. Es versteht sich, dass der n-dimensionale Betriebsparameterraum auch in weitere Klassifizierungsvolumina unterteilt werden kann, welche bevorzugt weitere Fehlerzustände der Vorrichtung 200 indizieren. Das Unterteilen S40 des n-dimensionalen Betriebsparameterraums erfolgt, wie bei Support-Vector-Maschinen üblich, durch Berechnen, jeweils abhängig von der Dimension n des Betriebsparameterraums, einer optimalen Gerade, Ebene oder Hyperebene 65.

Die Support-Vector-Maschine kann beispielsweise als Hard-Margin Support-Vector-Maschine ausgebildet sein, insbesondere wenn die verwendeten Trainingsdaten linear separierbar sind, das heißt wenn in dem n-dimensionalen Betriebsparameterraum eine (n-1)-dimensionale Klassengrenze gezogen werden kann, welche die Klassifizierungsvolumina 51, 52 derart definiert, dass jedes Klassifizierungsvolumen 51, 52 genau und nur die jeweils diesem Klassifizierungsvolumen 51, 52 zugeordneten Trainingsdaten 61, 62 umfasst.

In anderen Fällen, beispielsweise wenn die Trainingsdaten 61, 62 nicht linear separierbar sind, kann die Support-Vector-Maschine beispielsweise als eine Soft-Margin Support-Vector-Maschine ausgebildet sein, beispielsweise als eine L1 Soft-Margin Support-Vector-Maschine oder eine L2 Support-Vector-Maschine.

In einem Schritt S50 wird durch die Support-Vector-Maschine 22 bestimmt, der erzeugte Betriebspunkt einem der Klassifizierungsvolumina 51, 52 zugeordnet. Dies geschieht üblicherweise mittels einer sogenannten Entscheidungsfunktion (Englisch: "decision function").

In einem Schritt S60 wird ein Zustand der Vorrichtung 200 gemäß demjenigen Klassifizierungsvolumen 51, 52, in welchem der erzeugte Betriebspunkt angeordnet ist, bestimmt.

In einem Schritt S70 schließlich wird ein Ausgabesignal 71 erzeugt und ausgegeben, welches zumindest den bestimmten Zustand der Vorrichtung 200 indiziert. Wie im Voranstehenden beschrieben, kann das Ausgabesignal 71 weitere Information enthalten, beispielsweise einen erwarteten Zeitpunkt, an welchem der aktuelle Betriebspunkt von dem Klassifizierungsvolumen, in welchem er sich aktuell befindet, in ein anderes Klassifizierungsvolumen wechseln wird, und dergleichen mehr.

Das Verfahren kann außerdem dazu verwendet werden, die Einflüsse der verschiedenen Betriebsparameter auf die Fehlerzustände der Vorrichtung 200 näher zu bestimmen. Hierzu wird für jede Klassifizierungsgrenze (das heißt optimale Gerade, Ebene oder Hyperebene 65) ein jeweiliger Normalvektor bestimmt (vorteilhaft normiert auf eine Länge von 1), welcher auf der entsprechenden Klassengrenze senkrecht steht. Der Begriff "Normalenvektor" bezieht sich hier nicht etwa auf den Normalzustand der Vorrichtung 200, sondern auf die senkrechte Anordnung bezüglich der Klassengrenze.

Die einzelnen Einträge des Normalenvektors an den verschiedenen Indizes des Normalenvektors geben Aufschluss darüber, in welche Richtung der Normalenvektor in dem Betriebsparameterraum zeigt, so dass deren Absolutbeträge Aufschluss darüber geben, Änderungen in welchen Betriebsparametern x1, x2 besonders schnell eine Veränderung zwischen Klassifizierungsvolumina hervorrufen.

Demnach kann in einem optionalen Schritt S80 ein Bestimmen eines jeweiligen Normalenvektors auf jede Ebene oder Hyperebene, welche das erste Klassifizierungsvolumen von einem Klassifizierungsvolumen trennt, welches einen Fehlerzustand der Vorrichtung indiziert, erfolgen.

In einem optionalen Schritt S90 kann daraufhin ein Bestimmen und Ausgeben des Werts des betragsmäßig größten Eintrags jedes bestimmten Normalenvektors, zusammen mit dem entsprechenden Indexwert, erfolgen, so dass etwa bei einer Fehleraufarbeitung eines Fehlerzustands der Vorrichtung 200 in einer Werkstatt oder in einem Labor ersichtlich ist, welcher Betriebsparameter x1, x2 vorrangig zu prüfen ist, um die Ursache für den Fehlerzustand zu finden.

Die Schritte S80 und S90 können beispielsweise durch ein von der Recheneinrichtung 20 implementiertes Auswertungsmodul durchgeführt werden. Alternativ können die Schritte S80 und S90 auch von einer externen Auswertungseinrichtung durchgeführt werden, welche Teil des Systems 100 ist und an die Rechenrichtung 20 des Systems anschließbar ist.

Wenn, wie im Voranstehenden beschrieben, eine Rangfolge von Einträgen des Normalenvektors ausgegeben wird, können vorteilhaft die entsprechenden Betriebsparameter x1, x2 in dieser Reihenfolge durchgeprüft werden, um sicherzustellen, dass die wahrscheinlichsten Fehlerursachen zuerst geprüft werden. Auf diese Weise kann sich eine benötigte Zeit für das Finden von Fehlerursachen merklich verkürzen.

Besonders vorteilhaft ist diese Vorgehensweise, wenn der n-dimensionale Betriebsparameterraum durch die trainierte Support-Vector-Maschine 22 in mindestens drei Klassifizierungsvolumina unterteilt wird, wobei das erste Klassifizierungsvolumen 51 den Normalzustand der Vorrichtung indiziert und das zweite Klassifizierungsvolumen 52 und ein drittes Klassifizierungsvolumen unterschiedliche Fehlerzustände der Vorrichtung 200 indizieren.

In dem Schritt S80 kann hierbei ein Bestimmen eines jeweiligen Normalenvektors auf jede Ebene oder Hyperebene 65, welche das erste Klassifizierungsvolumen 51 von einem Klassifizierungsvolumen 52 trennt, welches einen Fehlerzustand der Vorrichtung 200 indiziert, erfolgen. Die Normalenvektoren geben somit an, aufgrund vornehmlich welcher Betriebsparameter x1, x2 der Betriebspunkt aus dem ersten Klassifizierungsvolumen (Normalzustand) jeweils in eines der Klassifizierungsvolumina 52 übertreten würde, welches einen Fehlerzustand der Vorrichtung 200 indiziert.

In Fig. 2 beispielsweise ist der Normalenvektor N1 vorteilhaft so angeordnet, dass er von dem ersten Klassifizierungsvolumen 51 in Richtung des zweiten Klassifizierungsvolumens 52 zeigt. Da die Klassifizierungsgrenze in Fig. 2 eine optimale Gerade 65 ist, welche beispielhaft durch x1 = x2 definiert ist, beträgt der Normalenvektor beispielsweise $(1/\sqrt{2}, -1/\sqrt{2})^{\mathrm{T}}$, wobei für das Bestimmen der Länge eines Vektors (und somit des Normalenvektors) die Wurzel des Skalarprodukts des Vektors mit sich selbst verwendet wurde. In einem anderen Normierungsschema könnte der Normalenvektor so normiert sein, dass sich die Absolutbeträge seiner Einträge zu Eins addieren.

Da vorliegend eine Rangfolge der Absolutbeträge der Einträge der Normalenvektoren verwendet wird, ist eine Normierung des Normalenvektors auf eine Länge von Eins nicht zwingend notwendig. Vorteilhaft ist es jedoch, wenn, wie im Voranstehenden beschrieben, die erfassten Betriebsparameter jeweils als Anteile (insbesondere als Bruchteile) eines jeweils entsprechenden Betriebsparameter-Maximalwerts erfasst werden, wobei die jeweiligen Betriebsparameter-Maximalwerte im Voraus bestimmt und in der Erfassungseinrichtung 10 und/oder der Recheneinrichtung 20 hinterlegt sein können. Mit anderen Worten sind die Betriebsparameter vorteilhaft jeweils als Werte zwischen 0 und 1, beides eingeschlossen, erfasst.

Bei dem Beispiel in Fig. 2 ergäbe sich somit, dass beide Betriebsparameter x1, x2 jeweils denselben Einfluss auf ein mögliches Wandern des aktuellen Betriebspunkts von dem ersten Klassifizierungsvolumen 51 in das zweite Klassifizierungsvolumen 52 haben.

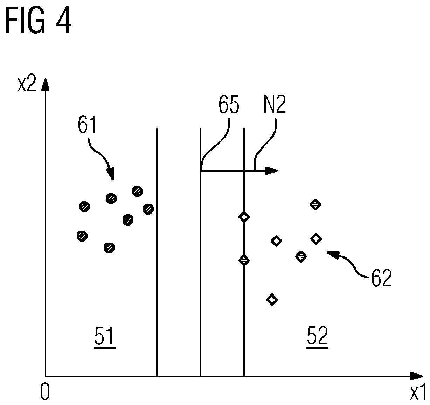

Fig. 4 zeigt schematisch eine Variante der in Fig. 2 dargestellten Situation, bei welcher die ersten Trainingsdaten 61 und die zweiten Trainingsdaten 62 derart beschaffen sind, dass die Klassifizierungsgrenze (optimale Gerade, Ebene oder Hyperebene 65), vorliegend eine Gerade) sich parallel zu der vertikalen Achse x2 erstreckt.

Der in Fig. 4 eingezeichnete Normalenvektor N2, welcher von dem ersten Klassifizierungsvolumen 51 in Richtung des zweiten Klassifizierungsvolumens 52 zeigt, ist durch $N2 = (1,0)^T$ definiert. In der Analyse ergibt sich somit, dass für eine Bewegung des aktuellen Betriebspunkts von dem ersten Klassifizierungsvolumen 51 in das zweite Klassifizierungsvolumen 52 lediglich der erste Betriebsparameter x1 ausschlaggebend ist.

Bei einer Überprüfung der Fehlerursache kann in diesem Fall somit auf eine Überprüfung des zweiten Betriebsparameter x2 vollständig verzichtet werden. In Fig. 2 und Fig. 4 sind zwei Extrembeispiele dargestellt. Es versteht sich, dass im Realfall einerseits Betriebsparameterräume mit einer Dimensionalität von deutlich mehr als n = 2 auftreten werden und dass eine Vielzahl von Betriebsparametern x1, x2 Einfluss darauf haben wird, ob ein aktueller Betriebspunkt sich von dem ersten Klassifizierungsvolumen 51 ausgehend in Richtung eines Klassifizierungsvolumens 52, welches einen Fehlerzustand der Vorrichtung 200 indiziert, bewegen wird.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen.

**Patentansprüche**

1. System (100) zum Bestimmen eines Zustands einer Vorrichtung (200), mit:

   einer Erfassungseinrichtung (21), welche zum Erfassen von mindestens zwei Betriebsparametern (x1, x2) der Vorrichtung (200) während deren Betriebs ausgebildet ist; und
   einer Recheneinrichtung (20), welche dazu ausgebildet ist, ein Betriebspunktmodul (21), eine trainierte Support-Vector-Maschine, SVM (22), und ein Ausgabemodul (23) zu implementieren;
   wobei das Betriebspunktmodul (21) dazu ausgebildet ist, aus den mindestens zwei erfassten Betriebsparametern (x1, x2) einen Betriebspunkt in einem n-dimensionalen Betriebsparameterraum zu erzeugen, wobei n größer gleich zwei ist;
   wobei die trainierte SVM (22) dazu ausgebildet und trainiert ist, den n-dimensionalen Betriebsparameterraum in mindestens zwei Klassifizierungsvolumina (51, 52) zu unterteilen, welche jeweils unterschiedliche Zustände der Vorrichtung (200) indizieren;
   wobei ein erstes Klassifizierungsvolumen (51) einen Normalzustand der Vorrichtung (200) indiziert und wobei ein zweites Klassifizierungsvolumen (52) einen Fehlerzustand der Vorrichtung (200) indiziert;
   wobei die trainierte SVM (22) außerdem dazu ausgebildet ist, den von dem Betriebspunktmodul (21) erzeugten Betriebspunkt einem der Klassifizierungsvolumina (51, 52) zuzuordnen; und
   wobei das Ausgabemodul (23) dazu ausgebildet ist, einen Zustand der Vorrichtung (200) gemäß demjenigen Klassifizierungsvolumen (51, 52) zu bestimmen, welchem der erzeugte Betriebspunkt durch die trainierte SVM (22) zugeordnet wurde, und ein Ausgabesignal (71) auszugeben, welches zumindest den bestimmten Zustand der Vorrichtung (200) indiziert.

2. System (100) nach Anspruch 1,

   wobei die von der Erfassungseinrichtung (21) erfassten Betriebsparameter (x1, x2) mindestens einen der folgenden Betriebsparameter umfassen:

   • eine elektrische Spannung;
   • eine elektrische Stromstärke;
   • eine Beschleunigung;
   • eine lineare Beschleunigung;
   • eine Rotationsgeschwindigkeit;
   • eine Rotationsbeschleunigung;
   • eine Temperatur.

**3.** System (100) nach Anspruch 1 oder 2,

wobei die trainierte SVM (22) dazu ausgebildet ist, den n-dimensionalen Betriebsparameterraum in mindestens drei Klassifizierungsvolumina (51, 52) zu unterteilen, wobei das erste Klassifizierungsvolumen (51)den Normalzustand der Vorrichtung (200) indiziert und wobei das zweite Klassifizierungsvolumen (52) und ein drittes Klassifizierungsvolumen unterschiedliche Fehlerzustände der Vorrichtung (200) indizieren.

**4.** System (100) nach Anspruch 3,

wobei die SVM (22) eingerichtet ist, einen linearen Kernel zu verwenden.

**5.** System (100) nach einem der Ansprüche 3 oder 4,

wobei die Erfassungseinrichtung (21) dazu eingerichtet ist, die erfassten Betriebsparameter (x1, x2) als Anteile eines jeweils entsprechenden Betriebsparametermaximalwerts zu erfassen.

**6.** System (100) nach einem der Ansprüche 3 bis 5,

wobei die Recheneinrichtung (20) außerdem dazu ausgebildet ist, ein Auswertungsmodul zu implementieren, welches dazu ausgebildet ist:

- einen jeweiligen Normalenvektor (N1, N2) auf jede Ebene oder Hyperebene (65) zu bestimmen, welche das erste Klassifizierungsvolumen (51), welches den Normalzustand der Vorrichtung (200) identifiziert, von einem Klassifizierungsvolumen (52) trennt, welches einen Fehlerzustand der Vorrichtung (200) indiziert, und
- für jeden der bestimmten Normalenvektoren (N1, N2) den Wert des betragsmäßig größten Eintrags des Normalenvektors (N1, N2) zu bestimmen und auszugeben.

**7.** Vorrichtung (200), umfassend ein System (100) nach einem der Ansprüche 1 bis 6.

**8.** Verfahren zum Bestimmen eines Zustands einer Vorrichtung (200), mit den Schritten:

Betreiben (S10) der Vorrichtung (200); Erfassen (S20) von mindestens zwei Betriebsparametern (x1, x2) der Vorrichtung (200) während deren Betriebs; Erzeugen (S30) eines Betriebspunkts in einem n-dimensionalen Betriebsparameterraum basierend auf den mindestens zwei erfassten Betriebsparametern (x1, x2), wobei n größer gleich zwei ist; Unterteilen (S40) des n-dimensionalen Betriebsparameterraums in mindestens zwei Klassifizierungsvolumina (51, 52), welche jeweils unterschiedliche Zustände der Vorrichtung (200) indizieren, unter Verwendung einer trainierten Support-Vector-Maschine, SVM (22); wobei ein erstes Klassifizierungsvolumen (51) einen Normalzustand der Vorrichtung (200) indiziert und wobei ein zweites Klassifizierungsvolumen (52) einen Fehlerzustand der Vorrichtung (200) indiziert; Zuordnen (S50) des erzeugten Betriebspunkts zu einem Klassifizierungsvolumen (51, 52); Bestimmen (S60) eines Zustands der Vorrichtung (200) gemäß demjenigen Klassifizierungsvolumen (51, 52), welchem der erzeugte Betriebspunkt zugeordnet wurde; und Ausgeben (S70) eines Ausgabesignals (71), welches zumindest den bestimmten Zustand der Vorrichtung (200) indiziert.

**9.** Verfahren nach Anspruch 8,

wobei der n-dimensionale Betriebsparameterraum durch die trainierte SVM (22) in mindestens drei Klassifizierungsvolumina (51, 52) unterteilt wird, wobei das erste Klassifizierungsvolumen (51) den Normalzustand der Vorrichtung (200) indiziert und wobei das zweite Klassifizierungsvolumen (52) und ein drittes Klassifizierungsvolumen unterschiedliche Fehlerzustände der Vorrichtung (200) indizieren.

**10.** Verfahren nach Anspruch 8 oder 9,

wobei die erfassten Betriebsparameter (x1, x2) als Anteile eines jeweils entsprechenden Betriebsparametermaximalwerts erfasst werden; weiterhin umfassend die Schritte:

Bestimmen (S80) eines jeweiligen Normalenvektors (N1, N2) auf jede Ebene oder Hyperebene (65), welche das erste Klassifizierungsvolumen (51) von einem Klassifizierungsvolumen (52) trennt, welches einen Fehlerzustand der Vorrichtung (200) indiziert, und Bestimmen und Ausgeben (S90) des Werts des betragsmäßig größten Eintrags jedes bestimmten Normalenvektors (N1, N2).

# FIG 1

# FIG 2

## FIG 3

FIG 4

Europäisches
Patentamt

European
Patent Office

Office européen
des brevets

# EUROPÄISCHER RECHERCHENBERICHT

Nummer der Anmeldung

EP 18 18 9722

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | EP 3 296 822 A2 (HONEYWELL LTD [CA])<br>21. März 2018 (2018-03-21)<br>* Absätze [0004], [0013], [0014],<br>[0033], [0040], [0051], [0057],<br>[0066], [0067]; Abbildung 6 *<br>----- | 1,2,4,5,<br>7,8<br>3,6,9,10 | INV.<br>G05B23/02 |
| X | US 2015/293523 A1 (YAMAMOTO HIDEAKI [JP]<br>ET AL) 15. Oktober 2015 (2015-10-15)<br>* Zusammenfassung; Abbildungen 3, 4 *<br>----- | 1,8 | |
| X | DE 10 2008 058422 A1 (PRECITEC ITM GMBH<br>[DE]; PRECITEC KG [DE])<br>27. Mai 2010 (2010-05-27)<br>* Ansprüche 1-3 *<br>----- | 1,8 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 19. Februar 2019 | Messelken, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 9722

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2019

| Im Recherchenbericht angeführtes Patentdokument | Datum der Veröffentlichung | Mitglied(er) der Patentfamilie | Datum der Veröffentlichung |
|---|---|---|---|
| EP 3296822 A2 | 21-03-2018 | CN 107831736 A<br>EP 3296822 A2<br>US 2018081328 A1 | 23-03-2018<br>21-03-2018<br>22-03-2018 |
| US 2015293523 A1 | 15-10-2015 | CN 105171525 A<br>JP 6340236 B2<br>JP 2015203646 A<br>US 2015293523 A1 | 23-12-2015<br>06-06-2018<br>16-11-2015<br>15-10-2015 |
| DE 102008058422 A1 | 27-05-2010 | KEINE | |

EPO FORM P0461

Für nähere Einzelheiten zu diesem Anhang : siehe Amtsblatt des Europäischen Patentamts, Nr.12/82

EP 3 614 220 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SHIGEO ABE.** Support vector machines for pattern classification. Springer-Verlag London, 2010